# FASCICULE DE BREVET EUROPEEN

(11) **EP 0 498 696 B1**
(45) Date de publication et mention de la délivrance du brevet: **30.11.1994**
(21) Numéro de dépôt: 92400229.8
(22) Date de dépôt: 29.01.1992
(51) Int. Cl.: B65F 1/14

(54) **Dispositif pour diminuer la violence des chocs provoqués par la chute d'objets à l'intérieur d'un réceptacle collecteur et réceptacle correspondant**
Vorrichtung zum Dämpfen des Aufpralls beim Fall von Objekten in einem Sammelbehälter und entsprechender Behälter
Device for diminishing the violence of the shocks caused by the fall of objects in a collecting container and corresponding container

(30) Priorité: 08.02.1991 FR 9101443
(43) Date de publication de la demande: 12.08.1992
(73) Titulaire: ALLIBERT EQUIPEMENT, F-92748 Nanterre Cedex (FR)
(72) Inventeur: Faucillon, Michel, F-95560 Baillet-en-France (FR); Moret, Michel, F-95600 Eaubonne (FR)
(74) Mandataire: Lerner, François

(56) Documents cités:
- DE-U- 8 531 211
- FR-A- 2 536 047

## Description

L'invention se rapporte à un dispositif pour diminuer la violence et/ou le bruit des chocs provoqués par la chute d'objets à l'intérieur d'un réceptacle collecteur, ainsi qu'au réceptacle ainsi équipé.

En particulier dans le domaine des conteneurs à verre utilisés aujourd'hui assez couramment pour collecter des objets en verre, se pose le problème des conditions de recyclage de ces objets ainsi collectés.

Compte tenu de la réalisation actuelle des réceptacles collecteurs, lorsque les objets qui y sont jetés sont fragiles (tels les objets en verre), ceux-ci se brisent à l'intérieur du conteneur, pouvant rendre plus délicate leur récupération lors du vidage du conteneur et rendant de surcroît ce dernier particulièrement sonore.

Pour remédier à ces problèmes, différentes solutions pouvaient être envisagées, l'une d'elles pouvant par exemple consister à assurer un guidage des objets à l'intérieur du réceptacle collecteur, par exemple au moyen de goulottes disposées sensiblement en regard d'ouvertures prévues à travers une paroi latérale du conteneur pour l'introduction des objets dans ce dernier, ces goulottes ayant alors pour fonction de diriger les objets vers la partie basse du conteneur.

Mais plutôt que de prévoir un dispositif de guidage, l'invention a préféré proposer des moyens absorbeurs de choc disposés à l'intérieur du réceptacle collecteur, sous les ouvertures d'introduction des objets.

Il est même apparu préférable de conseiller en tant que moyens absorbeurs de chocs, l'utilisation d'écrans d'amortissement interposés donc sur le trajet normal de chute des objets pour amortir cette chute avant que lesdits objets n'atteignent le fond du réceptacle, ces écrans étant alors reliés par des moyens de suspension ou de liaison flexibles à une pièce d'attache fixe logée à l'intérieur de ce réceptacle.

Ainsi, et notamment dans le cas d'objets fragiles, cassants et/ou dont les chocs en fin de chute sont assez bruyants, va t-on pouvoir éviter que ces objets se cassent immanquablement en absorbant au moins en partie leur énergie de chute. De surcroît, le vidage des conteneurs pleins pourra être rendu plus efficace, les écrans s'escamotant en quelque sorte pour permettre aux objets d'être évacués plus aisément ; ceci habituellement grâce à une trappe mobile située dans le fond des conteneurs.

Si l'utilisation de moyens flexibles de liaison des écrans est retenue, on pourra notamment préférer employer pour ce faire des lames souples ou relativement élastiques qui pourront supporter les écrans en étant par exemple fixées sensiblement en porte-à-faux à la pièce d'attache.

On pourra même compléter l'utilisation de ces lames par des contre-lames courbes peut-être plus rigides, fixées également à la pièce d'attache et s'étendant sous lesdites lames pour en limiter la courbure sous effort, évitant ainsi quasiment toute possibilité de rebondissement des objets sur les écrans.

Mais d'autres solutions pourraient être retenues.

On notera également que ces écrans d'amortissement pourront en particulier consister en plusieurs plaques écartées les unes des autres à un niveau donné d'élévation.

De cette manière, les écrans pourront ménager à leur niveau et entre eux des passages facilitant encore le vidage des conteneurs, sans pour autant nuire à leur fonction d'amortissement.

D'autres caractéristiques et avantages de l'invention apparaîtront encore de la description qui va suivre faite en référence aux dessins annexés donnée uniquement à titre d'exemple de réalisation et dans lesquels :
- la figure 1 est une vue en coupe verticale médiane d'un réceptacle collecteur équipé du dispositif d'absorption de l'invention,
- la figure 2 est une vue en coupe horizontale selon la ligne II-II de la figure 1 (cette vue ayant été complétée par symétrie à partir de la figure 1),
- la figure 3 est une vue en coupe selon la ligne III-III de la figure 2,
- et la figure 4 est une vue agrandie de la partie repérée IV sur la figure 3.

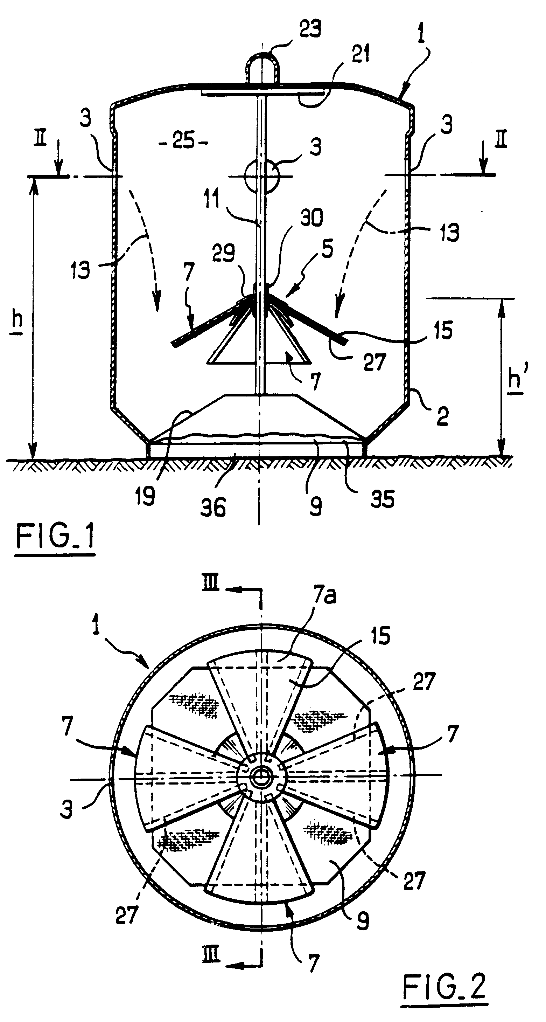

Avant de définir précisément le mode plus particulier de réalisation qui a été envisagé en référence aux figures, on va tout d'abord présenter ci-après brièvement le principe général de l'invention en faisant référence plus spécifiquement à la figure 1.

Comme cela a été mentionné, le présent dispositif vise donc à diminuer la violence des chocs provoqués par la chute d'objets, tels par exemple que des bouteilles en verre, voire des boîtes métalliques, à l'intérieur d'un réceptacle, tel que le conteneur 1, dont la paroi latérale d'enveloppe 2 (par exemple en matière plastique) est pourvue, à un niveau h d'élévation par rapport à son assise, d'ouvertures 3 dimensionnées pour permettre à un utilisateur de jeter dans le conteneur les objets qui doivent y être reçus.

Selon l'invention, ce conteneur est équipé intérieurement d'un dispositif repéré dans son ensemble 5 comprenant des moyens absorbeurs de chocs (repérés sous les références 7 et 9) disposés sensiblement sous les ouvertures 3.

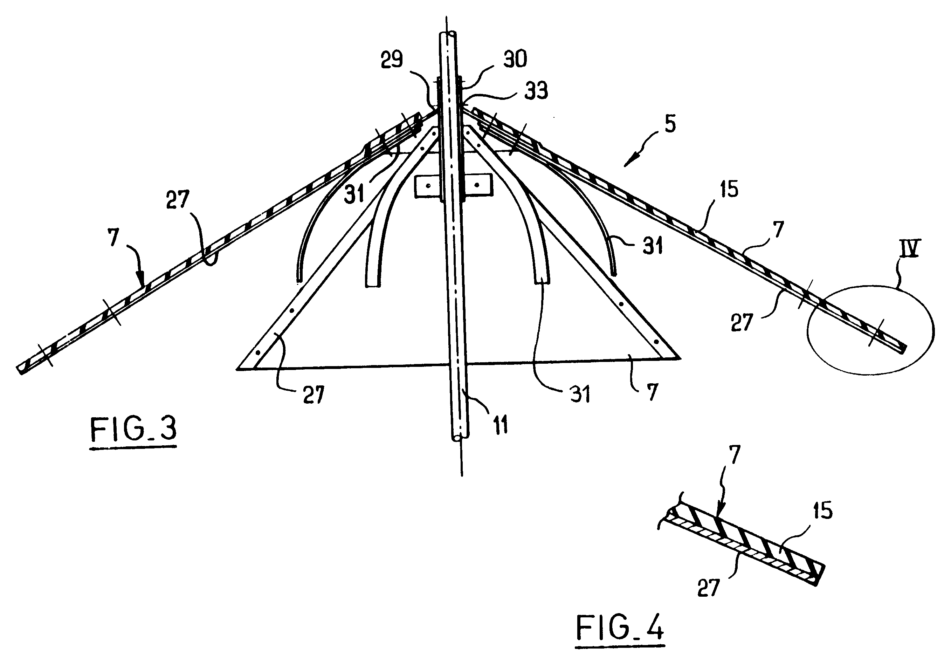

Structurellement, les moyens absorbeurs de chocs en question pourront notamment consister, comme illustrés sur les figures 1 à 4, en des surfaces formant écrans 7 reliées à une pièce d'attache fixe s'étendant à l'intérieur du récipient, tel que le mât 11, ces surfaces étant disposées transversalement à une certaine hauteur pour intercepter les objets sur leur trajet normal de chute avant qu'ils ne touchent le fond du conteneur (ce trajet a été schématisé par les flèches 13 sur la figure 1).

De préférence, les surfaces 7 pourront se présenter sous la forme de plaques constituées d'une couche 15 de matière souple ou caoutchouteuse relativement insonorisante (telle qu'une feuille de caoutchouc synthétique ou d'une matière plastique "molle").

Une surface support plus dure revêtue sur sa face supérieure d'une telle couche 15 pourrait également convenir.

Pour la mise en place de ces surfaces amortissantes, il a été imaginé dans l'invention la possibilité d'utiliser, en tant que pièce fixe, le mât central 11 qui, comme sur certains conteneurs à verre existants, s'étend ici sensiblement verticalement au milieu du conteneur depuis une structure rigide inférieure 19 jusqu'à une plaque interne transversale supérieure 21 sur laquelle est fixée un anneau de levage 23 relié à la structure 19 via les pièces 11 et 21 et faisant saillie vers l'extérieur de ce conteneur (dont on rappelera à toutes fins utiles que la paroi d'enveloppe 2 peut être réalisée en matière plastique).

Comme illustrées sur les figures, les plaques 7 pourront être disposées autour du mât 11 pour former une étoile à plusieurs branches plus ou moins horizontales, par exemple à quatre branches ménageant entre elles des espaces transversaux qui pourront être utiles notamment lors du vidage du conteneur.

Avantageusement, ces plaques ou pales seront suspendues sensiblement en porte-à-faux au mât. A cet effet, il a été envisagé d'utiliser des barres ou lames 27 relativement élastiques ou flexibles, supportant lesdites plaques 7 et prises "en sandwich" à leur extrémité de fixation entre des plaques de fixation 29 et des contre-lames (par exemple en acier) 31 de renfort plus ou moins élastiques limitant la courbure des lames 27. Ces contre-lames ont été ici sensiblement disposées sous les plaques 7 à proximité du mât et ont été courbées pour plus de résistance.

Par ailleurs, sur les figures, les plaquettes 29 ont été représentées comme reliées au mât par un manchon 30, entourant localement ce mât et pouvant coulisser le long de celui-ci de manière que l'on puisse attacher ou fixer à la hauteur h′ la plus adaptée les surfaces amortissantes qu'il supporte, un dispositif 33 de blocage au mât (tel qu'une clavette) pouvant être prévu pour permettre de fixer le tout à à hauteur voulue.

Pour une bonne efficacité d'absorption et d'amortissement, les surfaces 7 seront avantageusement disposées sensiblement horizontalement, ou de préférence lègèrement inclinées par rapport à l'horizontale et vers l'extérieur pour dévier le trajet de chute des objets vers la périphérie libre dépourvue d'écran du volume intérieur 25 du réceptacle, comme on le comprend au vu notamment de la figure 1.

Compte tenu de la forme du conteneur à verre utilisé lors des essais qui ont été menés, il est apparu en outre préférable que les surfaces 7 s'élargissent vers leur extrémité périphérique 7a opposée au mât 11, de manière que ces surfaces présentent chacune sensiblement la forme de l'une des branches d'une "croix de Malte". Pour compléter les moyens absorbeurs qui viennent d'être présentés, il a également été envisagé de leur adjoindre un revêtement insonorisant repéré 9 sur les figures 1 et 2 et disposé sur le fond 35 du réceptacle. A titre de tel revêtement insonorisant, on pourra notamment prévoir d'utiliser tout type de moquette synthétique, de tapis souple (caoutchouc...), de flocage, ou d'enduit insonorisant.

Dans l'exemple présenté, le tapis 9 s'étend sur une trappe 36, laquelle obture, en position de fermeture, une ouverture formée dans le fond du conteneur.

Concernant ce type de trappes, on notera simplement qu'elles sont généralement articulées le long de l'un de leur côté de manière à être mobiles, l'ouverture de ces trappes pouvant être commandée par différents moyens lorsque les conteneurs doivent être vidés.

A toutes fins utiles et pour une description plus détaillée d'un conteneur à verre équipé d'une telle trappe de vidange, on pourra se reporter aux demandes de brevet français n° 2 624 109 et 2 592 636.

Bien entendu, il doit être clair que dans le cadre de l'invention, d'autres réceptacles collecteurs que des conteneurs à verre pourraient recevoir les moyens absorbeurs de chocs de l'invention. A titre d'exemple, on pourrait par exemple envisager de prévoir de tels moyens sur des poubelles ou autres récipients destinés à recevoir des ordures ménagères.

## Revendications

1. Dispositif pour diminuer la violence et/ou le bruit des chocs provoqués par la chute d'objets à l'intérieur d'un réceptacle collecteur (1) pourvu à un certain niveau d'élévation d'ouvertures (3) pour y introduire lesdits objets, ce dispositif comprenant des moyens absorbeurs de chocs (5, 7, 9) lesquels sont disposés à l'intérieur du réceptacle sous lesdites ouvertures (3) et comportent des surfaces formant écrans (7) reliés à une pièce d'attache fixe (11) et interposés sur le trajet normal de chute des objets, pour amortir cette chute avant qu'ils n'atteignent le fond (35) du réceptacle, caractérisé en ce que lesdits écrans (7) d'amortissement sont reliés à ladite pièce d'attache fixe (11) par l'intermédiaire de moyens de suspension ou de liaison flexibles (27, 31).

2. Dispositif selon la revendication 1 caractérisé en ce que lesdits moyens de suspension ou de liaison flexibles (27, 31) comprennent des lames (27) supportant les écrans (7), ces lames étant fixées sensiblement en porte-à-faux à ladite pièce d'attache (11).

3. Dispositif selon la revendication 2 caractérisé en ce que lesdits moyens de suspension comprennent en outre des contre-lames (31) relativement élastiques,courbes, fixées à proximité de la pièce d'attache (11) sous lesdites lames (27) pour en limiter la courbure sous effort.

4. Dispositif selon l'une quelconque des revendications précédentes caractérisé en ce que lesdits écrans (7) consistent en plusieurs plaques écartées les unes des autres à un niveau donné d'élévation.

5. Dispositif selon l'une des revendications précédentes caractérisé en ce que ladite pièce d'attache fixe consiste en un mât (11) sensiblement vertical autour duquel lesdits écrans (7) sont disposés pour former une étoile à plusieurs branches, ces branches s'élargissant vers leur extrémité (7a) opposée audit mât (11).

6. Dispositif selon l'une quelconque des revendications précédentes caractérisé en ce que les moyens (5) absorbeurs de chocs comprennent en outre un revêtement (9) insonorisant disposé sur le fond du réceptacle.

7. Dispositif selon la revendication 6 caractérisé en ce que ledit revêtement (9) est placé sur une trappe (36) ouvrable, mobile par rapport au réceptacle.

8. Réceptacle collecteur d'objets, tels tout particulièrement que des objets fragiles et/ou dont les chocs en fin de chute peuvent être bruyants, caractérisé en ce qu'il est équipé d'un dispositif selon l'une quelconque des revendications précédentes.

## Claims

1. Device for reducing the violence and/or noise of impact caused by objects falling inside a collection receptacle (1) provided at a given height with openings (3) for introducing the objects thereinto, this device comprising shock-absorbing means (5, 7, 9) which are disposed inside the receptacle below the openings (3) and comprise surfaces forming screens (7) connected to a fixed attachment part (11) and interposed on the normal path of fall of the objects in order to damp their fall before they reach the base (35) of the receptacle, characterised in that the damping screens (7) are connected to the fixed attachment part (11) by flexible suspension or connection means (27, 31).

2. Device according to Claim 1, characterised in that the flexible suspension or connection means (27, 31) comprise blades (27) supporting the screens (7), these blades being secured substantially such that they project from the attachment part (11).

3. Device according to Claim 2, characterised in that the suspension means further comprise relatively resilient curved counterblades (31) which are secured in the vicinity of the attachment part (11) under the blades (27) in order to restrict their curvature under stress.

4. Device according to any one of the preceding claims, characterised in that the screens (7) consist of a plurality of plates spaced apart from one another at a given height.

5. Device according to any one of the preceding claims, characterised in that the fixed attachment part consists of a substantially vertical mast (11) about which the screens (7) are disposed in order to form a star with a plurality of legs, these legs widening towards their ends (7a) opposite the mast (11).

6. Device according to any one of the preceding claims, characterised in that the shock-absorber means (5) further comprise a soundproof covering (9) disposed on the base of the receptacle.

7. Device according to Claim 6, characterised in that the covering (9) is placed on a trapdoor (36) which can be opened and is movable relative to the receptacle.

8. Receptacle for collecting objects, in particular such as objects which are fragile and/or of which the impact at the end of their fall may be noisy, characterised in that it is provided with a device according to any one of the preceding claims.

## Patentansprüche

1. Vorrichtung zum Verringern der Stärke und/oder des Geräusches von Stößen, die durch den Fall von Gegenständen in das Innere eines Sammelbehälters (1) hervorgerufen werden, welcher auf einem bestimmten Höhenniveau mit Öffnungen (3) versehen ist, um dort die Gegenstände einzuführen, wobei die Vorrichtung Absorptionsmittel (5, 7, 9) für die Stöße aufweist, welche im Inneren des Sammelbehälters unter den Öffnungen (3) angeordnet sind, und Oberflächen aufweist, welche Schirme (7) aufweisen, die mit einem festen Verbindungsstück (11) verbunden sind und auf der üblichen Fallstrecke der Gegenstände dazwischen angeordnet sind, um diesen Fall zu dämpfen, bevor sie den Boden (35) des Sammelbehälters erreichen, dadurch gekennzeichnet, daß die Dämpfungsschirme (7) mit dem festen Verbindungsstück (11) durch elastische Aufhängungs- oder Verbindungsmittel (27, 31) verbunden sind.

2. Vorrichtung nach Anspruch 1, dadurch gekennzeichnet, daß die elastischen Aufhängungs- oder Verbindungsmittel (27, 31) Lamellen (27) aufweisen, welche die Schirme (7) tragen, wobei die Lamellen im wesentlichen freitragend an dem Verbindungsstuck (11) befestigt sind.

3. Vorrichtung nach Anspruch 2, dadurch gekennzeichnet, daß die Aufhängemittel ferner relativ elastische, gekrümmte Gegenlamellen (31) aufweisen, welche in der Nähe des Verbindungsstückes (11) unter den Lamellen (27) befestigt sind, um deren Krümmung unter Beanspruchung zu begrenzen.

4. Vorrichtung nach einem der vorangegangenen Ansprüche, dadurch gekennzeichnet, daß die Schirme (7) aus mehreren Platten bestehen, welche auf einem gegebenen Höhenniveau voneinander im Abstand gehalten sind.

5. Vorrichtung nach einem der vorangegangenen Ansprüche, dadurch gekennzeichnet, daß das feste Verbindungsstück aus einer Stange (11) besteht, um welche die Schirme (7) im wesentlichen vertikal angeordnet sind, um einen Stern mit mehreren Ästen zu bilden, die sich zu ihrem Ende (7a) hin, welches dem Stab (11) gegenüberliegt, erweitern.

6. Vorrichtung nach einem der vorangegangenen Ansprüche, dadurch gekennzeichnet, daß die Absorptionsmittel (5) für die Stöße ferner eine schallisolierende Verkleidung (9) aufweisen, welche auf dem Boden des Sammelbehälters angebracht ist.

7. Vorrichtung nach Anspruch 6, dadurch gekennzeichnet, daß die Verkleidung (9) auf einer bearbeitbaren Klappe (36) angeordnet ist, welche bezüglich des Sammelbehälters beweglich ist.

8. Sammelbehälter für Gegenstände, ganz besonders für zerbrechliche Gegenstände und/oder Gegenstände, deren Stöße wegen des Falls geräuschvoll sein können, dadurch gekennzeichnet, daß er mit einer Vorrichtung nach einem der vorangegangenen Ansprüche ausgestattet ist.
